Europäisches Patentamt

European Patent Office

Office européen des brevets

(19)

(11) Publication number: **0 040 055**
**A1**

(12) # EUROPEAN PATENT APPLICATION

(21) Application number: **81302027.8**

(22) Date of filing: **07.05.81**

(51) Int. Cl.³: **C 08 L 27/06**

(30) Priority: **08.05.80 GB 8015214**

(43) Date of publication of application:
**18.11.81 Bulletin 81/46**

(84) Designated Contracting States:
**AT BE CH DE FR GB IT LI NL SE**

(71) Applicant: **BP Chemicals Limited**
**Britannic House Moor Lane**
**London, EC2Y 9BU(GB)**

(72) Inventor: **Wilson, Alan Stuart BP Chemicals Limited**
**Hayes Road Sully Penarth**
**South Glamorgan Wales CF6, 2YU(GB)**

(72) Inventor: **Wusteman, Philip BP Chemicals Limited**
**Hayes Road Sully Penarth**
**South Glamorgan Wales CF6, 2YU(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) **Plastisol compositions.**

(57) This invention relates to plastisol compositions for use in rigisols and containing a PVC paste resin(s) having an ISO viscosity number between 100 and 160, at least one butyl phthalate and at least one alkyl benzene. The rigisols thus produced have the desired viscosity stability in spite of the relatively inexpensive plasticizer esters used. The rigisols impart a hard, inflexible finish to products coated therewith and is particularly suitable for use on toys.

EP 0 040 055 A1

Croydon Printing Company Ltd.

1

## PLASTISOL COMPOSITIONS

The present invention relates to plastisols containing a butyl phthalate suitable for use in rigisols.

A 'rigisol' is a plastisol (i.e. dispersion of PVC resin in plasticisers together with heat stabilisers etc) which are so compounded that the fused end products are relatively hard and inflexible at normal temperatures. In formulating a rigisol, plasticiser selection is of great importance. It must confer sufficiently low plastisol viscosity to facilitate normal processes (spreading, rotational moulding, dipping etc) without conferring a soft or flexible finish to the end product. The following examples illustrate the applications of rigisols.

(a) Components of children's dolls with a hard finish. Plastisol is metered into a mould which is then rotated in 3 dimensions as it passes through a processing oven. The mould is split and the article removed.

(b) Stiff chemically blown PVC foams. These are used in self-supporting leathercloth which is used in the manufacture of suitcases etc. Formulations for this application would be similar to formulations used for (a) with the addition of a chemical blowing agent such as azodicarbonamide.

Plasticisers capable of giving low plastisol viscosity combined with a hard finish are often aliphatic dicarboxylic esters, such as e.g. di-isodecyl adipate and 2,2,4,-trimethylpentane-1,3-diol di-isobutyrate. Such esters give plastisols with relatively slow fusion rates requiring relatively high temperatures to achieve complete fusion. Attempts have been made to develop plasticiser blends which contain a high proportion of a fast fusing plasticiser, e.g. di-isobutyl phthalate (hereafter referred to as 'DIBP') to avoid this defect. Di-isobutyl phthalate has the advantage of being less expensive than other fast-fusing plasticisers such as e.g. n-butyl benzyl phthalate, di-propylene glycol dibenzoate, but in common with other plasticisers of this type it confers relatively high plastisol viscosity and poor viscosity stability.

We have found that the viscosity of a DIBP - containing plastisol can be greatly reduced by replacing a portion of the DIBP with an alkyl benzene.

Accordingly, the present invention is a plastisol composition suitable for use in rigisols, said composition comprising a dispersion of a paste forming polyvinyl chloride resin or resins having an ISO viscosity number of between 100 and 160 in a plasticiser mixture of a butyl phthalate and at least one alkyl benzene, the phthalate and the alkyl benzene being present in the plasticiser mixture in a ratio by volume of betwen 90:10 and 40:60 respectively.

The butyl phthalate may be di-n-butyl phthalate, di-iso-butyl phthalate or mixtures thereof. Di-iso-butyl phthalate is most preferred.

The alkyl benzene in the plastisol composition may be selected from a mono-, di- or tri-alkyl benzene and diphenyl alkanes and may have straight or branched chains containing between 7 and 17 carbon atoms. The alkyl benzenes may be light alkylates which are produced by oligomerisation of lower olefins followed by alkylation of the benzene nucleus. One such example is dodecyl benzene which is a branched propylene tetramer alkylate. These alkyl benzenes may be used singly or as a mixture. The volume ratio of di-isobutyl phthalate to alkyl benzene in the plasticiser mixture is preferably between 80:20 and 60:40.

The paste forming polyvinyl chloride resin dispersed in the mixture may be produced by any of the conventional methods of emulsion or micro-suspension polymerisation. The resin, whether used alone or as a blend with one or more other resins, must have an ISO viscosity number between 100 and 160. The dispersion of the resin(s) is suitably prepared by mixing the ingredients in any of the various types of industrial mixers conventionally used for the production of such plastisols. The ratio of the paste forming resin or the blend of such resins to the plasticiser mixture in the composition is suitably between 100:25 and 100:70, preferably between 100:30 and 100:50 by weight.

In addition the plastisols may contain minor amounts of other conventional plasticisers such as the higher dialkyl phthalates, e.g. n-butyl benzyl phthalate , 2,2,4-trimethylpentane-1,3-diol di-isobutyrate, phosphates such as triaryl phosphates, e.g. tritolyl phosphate, chlorinated hydrocarbons, e.g. chlorinated diphenyls and the like.

The plastisols may also contain other conventional additives such as heat stabilisers and epoxy esters. Where an expandable plastisol is used for producing stiff chemically blown polyvinylchloride foams, it may contain a blowing agent.

The present invention is further illustrated with reference to the following Example.

Example

Plastisols of the following composition were mixed in a laboratory planetary mixer and de-aerated under vacuum. The plasticiser levels were selected to give approximately the same viscosity. The control plastisol contained a general purpose plasticiser, di-octylphthalate, for comparison.

| | Example | Control |
|---|---|---|
| Breon* P130/1 [4] | 70 | 70 |
| Breon* S.100/30 [5] | 30 | 30 |
| Di-isobutyl phthalate | 25.3 | - |
| Alkyl benzenes [1] | 12.7 | - |
| Dioctyl phthalate | - | 47 |
| Interstab M122 [2] | 2 | 2 |
| Lankro* ED6 [3] | 5 | 5 |
| Plastisol viscosity ) 1 day | 30 | 32 |
| (Brookfield - poise) ) 2 days | 33 | 36 |

| | | |
|---|---|---|
| Softness number (B.S. 2782) after fusion | 36 | 46 |
| Relative deflection under load [6] (mm) after fusion | 27 | 72 |

Notes

\* Regd. Trade Mark

1 - Mixed isomers of monophenyl $C_{10-13}$ alkanes

2 - Liquid complex soal of Ba/Cd/Zn (Akzo Ltd.)

3 - Epoxy ester

4 - Medium viscosity paste - making PVC homopolymer, ISO viscosity No. 130 (K value 70), bulk density 250 $kg/m^3$ (BP Chemicals Ltd.)

5 - PVC suspension homopolymer, ISO viscosity No. 100, (K value 64), bulk density 550 $kg/m^3$ approx. (BP Chemicals Ltd.)

6 - Arbitrary test. Specimen 100 x 40 x 1.3 mm clamped horizontally. Downward deflection of free end measured after 1 minute.

The above tests show that the plasticisers of the present invention give rise to a product of lower softness number and flexibility without adversely affecting the plastisol viscosity.

Claims:

1.  A plastisol composition suitable for use in rigisols, characterised in that the composition comprises a dispersion of a polyvinyl chloride resin or resins having an ISO viscosity number between 100 and 160 in a plasticiser mixture of a butyl phthalate and at least one alkyl benzene, the phthalate and the alkyl benzene being present in the plasticiser mixture in a ratio by volume of between 90:100 and 40:60 respectively.

2.  A plastisol composition according to claim 1 wherein the butyl phthalate is selected from di-n-butyl phthalate, di-isobutyl phthalate and mixtures thereof.

3.  A plastisol composition according to any one of the preceding claims wherein the alkyl benzene is selected from a mono-alkyl benzene, a dialkyl benzene, a trialkyl benzene, a diphenylalkane and mixtures thereof.

4.  A plastisol composition according to claim 3 wherein the alkyl groups in the alkyl benzenes have straight or branched chains containing between 7 and 17 carbon atoms.

5.  A plastisol composition according to claim 4 wherein the alkyl benzene is dodecyl benzene.

6.  A plastisol composition according to any one of the preceding claims wherein the volume ratio of butyl phthalate to alkyl benzene in the plasticiser mixture is between 80:20 and 60:40..

7.  A plastisol composition according to any one of the preceding claims wherein the composition contains in addition a proportion of at least one auxiliary additive selected from a plasticiser, a heat stabiliser, an epoxy ester and a blowing agent.

8.  A plastisol composition according to any one of the preceding claims wherein the ratio of the polyvinyl chloride resin to the plasticiser mixture is between 100:30 and 100:50 by weight..

## DOCUMENTS CONSIDERED TO BE RELEVANT

| Category | Citation of document with indication, where appropriate, of relevant passages | Relevant to claim |
|---|---|---|
| X | FR - A - 1 034 769 (N.V. DE BATAAFSCHE PETROLEUM MAATSCHAPPIJ) <br><br> * Abstract; page 2, left-hand column, paragraph 3, right-hand column, paragraph 2 * | 1,8 |

---------

**CLASSIFICATION OF THE APPLICATION (Int. Cl.³)**

C 08 L 27/06

**TECHNICAL FIELDS SEARCHED (Int. Cl.³)**

C 08 L 27/06

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 05.08.1981 | FOUQUIER |

EPO Form 1503.1   06.78